# EUROPEAN PATENT APPLICATION

(11) **EP 4 775 434 A1**
(43) Date of publication of application: **15.07.2026**
(21) Application number: 25151815.5
(22) Date of filing: 14.01.2025
(51) Int. Cl.: B60L 7/14, B60L 7/18, B60L 7/26, B60L 15/20, B60L 50/40, B60L 50/51, B60L 50/75, B60L 58/15, B60L 58/18, B60L 58/22, B60L 58/40

(54) **A FUEL CELL SYSTEM FOR A VEHICLE**

(71) Applicant: Volvo Construction Equipment AB, 631 85 Eskilstuna (SE)
(72) Inventor: JOHANSSON, Peter, 352 34 VÄXJÖ (SE); ÖRKENRUD, Kim, 35264 VÄXJÖ (SE); KVIST, Roland, 360 42 BRAÅS (SE)
(74) Representative: Kransell & Wennborg KB

(57) **Abstract**

A fuel cell system (120) for a vehicle (1) equipped with a regenerative braking system (5), the fuel cell system comprising: an electric traction machine (10); a fuel cell (14) configured to power the electric traction machine, the power output from the fuel cell being controlled by a throttle (15) introducing a lag time between operation of the throttle and the power output of the fuel cell; an energy storage system (12) comprising a first energy storage device (12a) being a first battery pack or a first super capacitor, and a second energy storage device (12b) being a second battery pack or a second super capacitor; a control and relay unit (16) electrically connecting the fuel cell, the energy storage system and the electric traction machine to each other; a control system (17) comprising a processing circuitry (18) configured to: in response to identifying an operation of the throttle indicating an intended reduction in the power output from the fuel cell, control the control and relay unit to direct electricity from the fuel cell to the first energy storage device at least during a time corresponding to said lag time, and control the control and relay unit to direct electricity received from the regenerative braking system to the second energy storage device.

## Description

### TECHNICAL FIELD

The disclosure relates generally to fuel cell systems. In particular aspects, the disclosure relates to a fuel cell system for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle, unless explicitly stated so.

### BACKGROUND

Fuel cell systems are increasingly utilized in vehicles to provide efficient and sustainable power, e.g. common in the heavy machinery sector and particularly for work machines such as dump trucks, loaders, and other large vehicles used in mining, construction, and similar industries. However, such systems often face challenges related to energy management, particularly during transient operating conditions such as throttle adjustments and regenerative braking. A significant issue is the lag time, or lag response time, between throttle action and the corresponding change in power output from the fuel cell, which can lead to inefficient energy utilization. Furthermore, conventional systems often lack the ability to efficiently manage energy distribution between multiple energy storage devices, limiting their ability to optimize energy recovery and storage.

There is therefore a need for an improved energy management system for fuel cell-powered vehicles that minimizes energy loss, optimizes energy recuperation, and/or ensures reliable power delivery under varying operational conditions.

### SUMMARY

According to a first aspect of the disclosure, a fuel cell system for a vehicle equipped with a regenerative braking system is provided. The fuel cell system comprises: an electric traction machine; a fuel cell configured to power the electric traction machine, the power output from the fuel cell being controlled by a throttle introducing a lag time between operation of the throttle and the power output of the fuel cell; an energy storage system comprising a first energy storage device being a first battery pack or a first super capacitor, and a second energy storage device being a second battery pack or a second super capacitor; a control and relay unit electrically connecting the fuel cell, the energy storage system and the electric traction machine to each other; and a control system comprising a processing circuitry configured to: in response to identifying an operation of the throttle indicating an intended reduction in the power output from the fuel cell, control the control and relay unit to direct electricity from the fuel cell to the first energy storage device at least during a time corresponding to said lag time, and control the control and relay unit to direct electricity from the regenerative braking system to the second energy storage device. The first aspect of the disclosure may seek to solve problems related to inefficiencies in energy utilization due to the lag in response time of the fuel cell system, which prevents optimal energy recuperation. For example, energy loss due to failure of using the regenerative braking system and/or energy loss due to hydrogen wastage may be reduced. The previously mentioned lag time may thus be referred to as a lag in response time or simply a lag response time. A technical benefit may include improved energy efficiency of the drive line of the vehicle, improved energy recuperation and/or reduced hydrogen consumption by selectively managing energy flows from the fuel cell and regenerative braking system. By providing independent control of the first and second energy storage devices, the system enables efficient energy distribution and storage. The throttle may be associated with the acceleration or gas pedal of the vehicle. However, the throttle may be comprised in the fuel cell system or be considered a component of the fuel cell. The throttle may be referred to as being associated with the fuel cell. The first and second energy storage devices are typically configured to be individually controlled, and individually operated. For example, each of the first and second energy storage devices may be configured to operate the electric traction machine. The first and second energy storage devices may be separated by being housed in separate storage housings. Thus, the first energy storage device may comprise a first storage housing in which the cells of the first battery pack or first supercapacitor are housed, and the second energy storage device may comprise a second storage housing in which the cells of the second battery pack or second supercapacitor are housed, wherein the second storage housing is different, and separate to the first storage housing.

Further embodiments include controlled operation of the control and relay unit, by the processing circuitry, to direct electricity during specific and predefined operating conditions of the vehicle, such as uphill crests or high-demand situations. Hereby, a robust energy management may be achieved under varying conditions.

Optionally in some examples, including in at least one preferred example, the processing circuitry is configured to control the control and relay unit to direct electricity from the fuel cell to the first energy storage device at least partly prior to controlling the control and relay unit to direct electricity from the regenerative braking system to the second energy storage device. This sequencing allows the fuel cell to address immediate lag in response time while setting the regenerative braking system to optimize braking energy recovery. A technical benefit may include improved synchronization of the energy storage system with regards to utilization of generated electricity from the fuel cell and regenerative braking system.

Optionally in some examples, including in at least one preferred example, the processing circuitry is configured to control the control and relay unit to direct electricity from the fuel cell to the first energy storage device at least partly simultaneously with controlling the control and relay unit to direct electricity from the regenerative braking system to the second energy storage device. This configuration enables concurrent utilization of generated electricity from the fuel cell and regenerative braking system. A technical benefit may include improved energy recuperation efficiency.

Optionally in some examples, including in at least one preferred example, the processing circuitry is further configured to control the control and relay unit to direct electricity from the fuel cell to the first energy storage device and to control the control and relay unit to direct electricity from the regenerative braking system to the second energy storage device further in response to identifying a predefined operating condition of the vehicle, the predefined operating condition including the vehicle reaching the crest of an uphill portion of a road. The predefined condition may further include vehicle speed, road gradient, and/or predictive power demand of the electric traction machine. A technical benefit may include tailored energy recuperation with regards to the operating condition of the vehicle. The predefined operating condition of the vehicle may be at least partly determined by onboard sensors of the vehicle. For example, the predefined operating condition may include predicted operational information based on parameters such as vehicle weight, terrain profile including road gradient, and/or power demand of the electric machine in response to upcoming route segments. The predefined operating condition and used parameters may be dynamically updated using a dynamic vehicle model, e.g. based on historical vehicle data.

Optionally in some examples, including in at least one preferred example, both the first and second energy storage devices are configured to supply power to the electric traction machine either individually or simultaneously, based on a power demand of the electric traction machine. A technical benefit may include advantageous flexibility in power delivery to the electric traction machine. Hereby, the electric traction machine may receive adequate power under various operating conditions, while optimizing the utilization of generated electricity from the fuel cell and/or the regenerative braking system.

Optionally in some examples, including in at least one preferred example, during operation of the vehicle, the processing circuitry is configured to control the control and relay unit to maintain a predefined state in which there is no electrical interconnection between the first energy storage device and the second energy storage device. A technical benefit may include reduced interference between the first and second energy storage devices, e.g. when the first and second energy storage devices are performing different tasks such as being charged by different power sources, or supplying power to the electric traction machine. Thus, the operational independence of each energy storage device may be preserved. Moreover, by providing the predefined state in which there is no electrical interconnection between the first energy storage device and the second energy storage device, energy losses caused by unnecessary energy transfer between the first and second energy storage devices may be reduced.

Optionally in some examples, including in at least one preferred example, the processing circuitry is configured to control the control and relay unit to maintain the predefined state in response to that the first energy storage device is receiving electricity from the fuel cell and the second energy storage device is receiving electricity from the regenerative braking system. A technical benefit may include reduced interference between the first and second energy storage devices when the first and second energy storage devices are being charged by different power sources (the fuel cell and regenerative braking system). Thus, an efficient and simultaneous management of distinct different energy or electricity flows may be achieved.

Optionally in some examples, including in at least one preferred example, the processing circuitry is configured to control the control and relay unit to interconnect the first and second energy storage devices for SOC balancing. A technical benefit may include improved health of the energy storage devices. For example, the lifespan of the energy storage devices may be prolonged by preventing overuse or depletion of any one device, while providing balanced energy availability. The processing circuitry may be configured to perform the SOC balancing in response to that the difference in SOC between the first and second energy storage devices is above a predefined threshold value. As previously mentioned, the first and second energy storage devices may be first and second battery packs. As an alternative, the first and second energy storage devices may be first and second supercapacitors.

Optionally in some examples, including in at least one preferred example, the processing circuitry is configured to control the control and relay unit to supply power to the electric traction machine alternatingly between the first and second energy storage devices such that power is supplied to the electric traction machine from the energy storage device with the higher SOC. A technical benefit may include enabling the electric traction machine to operate with optimal energy efficiency with regards to the first and second energy storage devices. Thus, by utilizing electricity from the energy storage devices having the higher SOC (i.e. the most available energy storage device), over-discharge of one energy storage device may be avoided.

For example, the processing circuitry may be configured to: determine the SOC of the first and second energy storage devices; compare the SOC between the first and second energy storage devices; in response to that the difference in SOC between the first and second energy storage devices is above a predefined threshold value, either perform the SOC balancing between the first and second energy storage devices, or power to the electric traction machine with the energy storage device having the higher SOC.

Optionally in some examples, including in at least one preferred example, the processing circuitry is further configured to: in response to that the SOC of both the first and second energy storage devices exceeds a predefined SOC threshold, control the throttle to decrease the power output from the fuel cell; and in response to that the SOC of at least one of the first and second energy storage devices is below the predefined SOC threshold, control the throttle to resume power output from the fuel cell. A technical benefit may include preventing overcharging of the first and second energy storage devices while maintaining efficient operation of the fuel cell, and/or optimizing the use of available energy sources (fuel cell and energy storage system).

Optionally in some examples, including in at least one preferred example, the processing circuitry is further configured to: in response to identifying a power need of the electric traction machine exceeding the power output of the fuel cell, control the control and relay unit to direct electricity to the electric traction machine from the first or second energy storage device, whichever having the highest SOC. A technical benefit may include providing uninterrupted power delivery to the electric traction machine during high-demand operating conditions, while optimizing the use of available energy sources (fuel cell and energy storage system).

Optionally in some examples, including in at least one preferred example, the processing circuitry is further configured to: in response to that both the first and second energy storage devices have a SOC higher than a predetermined threshold value, control the throttle to decrease the power output from the fuel cell until at least one of the first and second energy storage devices has a SOC below the predetermined threshold value. A technical benefit may include preventing overcharging of the first and second energy storage devices while maintaining efficient operation of the fuel cell, and/or optimizing the use of available energy sources (fuel cell and energy storage system). Thus, unnecessary hydrogen consumption is reduced, ensuring efficient operation of the fuel cell system. The processing circuitry may be configured to control the throttle to decrease the power output from the fuel cell until both of the first and second energy storage devices has a SOC below the predetermined threshold value.

Optionally in some examples, including in at least one preferred example, the control and relay unit comprises a plurality of inverters and relays configured to selectively route power among the fuel cell, the electric traction machine, and each of the first and second energy storage devices according to control input signals from the processing circuitry. A technical benefit may include precise control over energy distribution to various components of the fuel cell system. Hereby, efficient operation of the fuel cell system is provided. The processing circuitry is typically configured to operate the electric traction machine by controlling the plurality of inverters and relays of the control and relay unit, e.g. powering the electric traction machine by the fuel cell and/or by the first and/or second energy storage device.

Optionally in some examples, including in at least one preferred example, the lag time of the fuel cell is between 0.5 and 10 seconds, such as between 1 and 5 seconds. A technical benefit may include providing sufficient time for the fuel cell system to manage energy or electricity redirection efficiently. Hereby, loss of energy during throttle operation may be reduced.

The operation of the throttle to control the power output of the fuel cell is associated with a lag time, or a lag in response time. Thus, the throttle introduces, in use, a lag time between an action of the throttle and the associated power output of the fuel cell for such action. The action may e.g. be opening (e.g. fully or partly opening) of the throttle for an increase in power output of the fuel cell, or closing (e.g. fully or partly closing) of the throttle for a reduction in power output of the fuel cell. Thus, the opening of the throttle is corresponding to an intended increase in power output of the fuel cell, as the power output of the fuel cell will increase after the lag time has passed, and the closing of the throttle is corresponding to an intended reduction in power output of the fuel cell, as the power output of the fuel cell will decrease after the lag time has passed.

It should be understood that that the fuel cell system may form a part of the electric drive line, or electric drive system of the vehicle. Thus, the fuel cell system of the first aspect may be referred to as an electric drive line of the vehicle comprising a fuel cell, or to a vehicle electric drive system comprising a fuel cell.

According to second aspect of the disclosure, a vehicle comprising a fuel cell system according to the first aspect is provided. The vehicle comprises a regenerative braking system configured to generate electricity during braking or deceleration of the vehicle. The second aspect of the disclosure may seek to solve the same problem as described for the first aspect of the disclosure. Thus, effects and features of the second aspect of the disclosure are largely analogous to those described above in connection with the first aspect of the disclosure, of which some are explicitly mentioned below typically without repeating the technical effect thereof.

Optionally in some examples, including in at least one preferred example, the first energy storage device is a first battery pack and the second energy storage device is a second battery pack.

Optionally in some examples, including in at least one preferred example, the first energy storage device is a first super capacitor and the second energy storage device is a second super capacitor.

Optionally in some examples, including in at least one preferred example, the control and relay unit comprises a plurality of inverters and relays configured to selectively route power among the fuel cell, the electric traction machine, and each of the first and second energy storage devices according to control input signals from the processing circuitry.

Optionally in some examples, including in at least one preferred example, the vehicle is a working machine.

Optionally in some examples, including in at least one preferred example, the vehicle is a loader or a dumper having a dump body for carrying material.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

**FIG. 1** is an exemplary, partly schematic, side view of a vehicle having a dump body according to one example.
**FIG. 2** is an exemplary, partly schematic, view of a fuel cell system of a vehicle according to one example.
**FIG. 3** is a schematic diagram of an exemplary computer system for implementing examples disclosed herein, according to one example.

### DETAILED DESCRIPTION

The detailed description set forth below provides information and examples of the disclosed technology with sufficient detail to enable those skilled in the art to practice the disclosure.

The disclosed technology may solve the problem relating to inefficiencies in energy utilization and/or recuperation in vehicles equipped with fuel cell systems, particularly during transient operation conditions including throttle actions to control the power output of the fuel cell. The disclosed technology utilizes a control and relay unit, in conjunction with a processing circuitry, to manage the flow of electricity between a fuel cell, a regenerative braking system, and an energy storage system comprising at least a first and second energy storage device. The fuel cell system directs electricity from the fuel cell to the first energy storage device during a lag time corresponding to the throttle action and resulting power output of the fuel cell and, typically simultaneously, directs electricity from the regenerative braking system to the second energy storage device. This configuration ensures that energy (or electricity) is efficiently captured and stored, even when the fuel cell response time lags behind the throttle action. A technical benefit may include improved energy efficiency of the drive line of the vehicle, improved energy recuperation and/or reduced hydrogen consumption. By providing separate pathways for energy distribution to the first and second energy storage devices, and selectively managing energy flows from the fuel cell and regenerative braking system (optionally interconnecting them for SOC balancing), the disclosed technology enables improved energy utilization, and potently prolonging the operational lifespan of the energy storage system. Moreover, the system may provide a reliable power delivery to the electric traction machine, either individually or simultaneously from the energy storage devices.

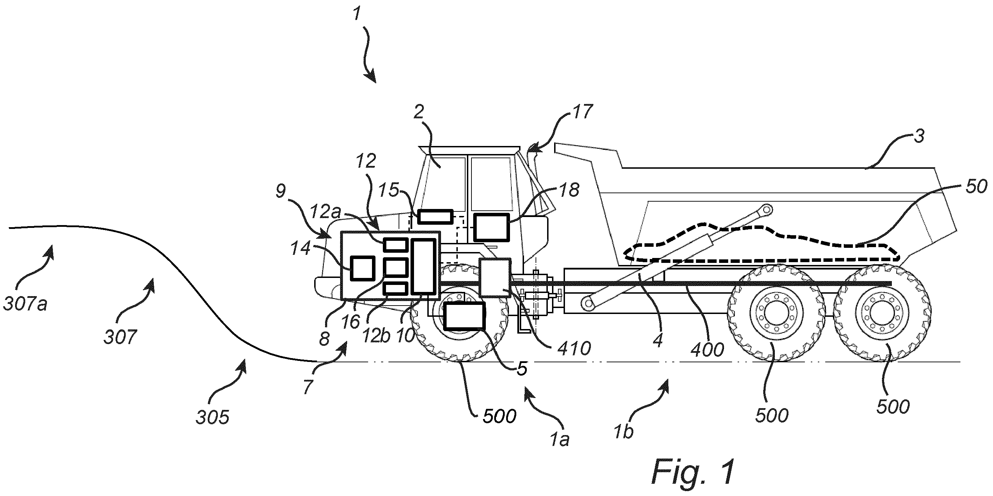

**FIG. 1** shows an exemplary vehicle 1 in the form of a working machine, here exemplified as a dumper. The vehicle 1 may e.g. be an autonomously driven working machine. The vehicle 1 is an electric vehicle, such as a full electric vehicle, comprising an electric drive system 7 including an electric drive line 8, a transmission 410 comprising at least a gearbox, and drive shafts 400 schematically shown to transfer motion to the drive wheels 500. The electric drive line 8 comprises a fuel cell system 9 including an electric traction machine 10 configured to propel the vehicle 1 and the drive wheels 500, a fuel cell 14 configured to power the electric traction machine 10, and an energy storage system 12. Even though a centrally arranged electric drive system 7 with one electric traction machine 10 is exemplified in Fig. 1, the vehicle 1 may comprise a de-centralized arranged electric drive system with one electric traction machine for each drive shaft associated with a pair of drive wheels. In the example of Fig. 1, the energy storage system 12 comprises a first energy storage device 12a being a first battery pack or a first super capacitor, and a second energy storage device 12b being a second battery pack or a second super capacitor, but it should be mentioned that the energy storage system 12 may comprise more than two energy storage devices. The energy storage system 12 may be configured to power the electric traction machine 10 parallel to the fuel cell 14. Any energy storage device being configured to power the electric traction machine 10 may be referred to as a traction energy storage device. Both the first and second energy storage devices 12a, 12b may be configured to supply power to the electric traction machine 10 either individually or simultaneously, based on a power demand of the electric traction machine 10.

As shown in Fig. 1, the vehicle 1 is a dumper (or loader) having a dump body 3 configured to carry material 50. For example, the vehicle 1 may comprise a tilting arrangement including at least one tilting cylinder 4 configured to tilt the dump body 3 to bring the dumper into a dumping state. Hereby, the material 50 carried by the dump body 3 may be unloaded. The vehicle 1 may comprise at least two frames, a first frame 1a or front frame supporting a cabin 2 of the vehicle 1, and a second frame 1b or rear frame supporting the dump body 3.

The vehicle 1 typically comprises a regenerative braking system 5 of a known type. The regenerative braking system 5 generally comprises a kinetic energy recovery system configured to transfer kinetic energy of an object in motion, i.e. the vehicle 1, into stored energy, i.e. charging of the energy storage system 12, to slow the vehicle 1 down. For example, the regenerative braking system 5 comprises an electric generator, which preferably is the same component as the previously mentioned electric traction machine 10. Thus, the energy produced when slowing the vehicle 1 down, typically by braking, is stored chemically in the energy storage devices 12a, 12b of the energy storage system 12 (i.e. regenerative charging of the energy storage devices 12, 12b, or simply referred to as regeneration). The regeneration of the regenerative braking system 5 is typically associated with a regeneration efficiency, i.e. how efficient the energy produced when slowing the vehicle 1 down is stored in the energy storage system 12. Thus, the regenerative braking system 5 is configured to generate electricity during braking or deceleration of the vehicle 1. The vehicle 1 may optionally comprise service brakes of a known type, typically as drum brakes or disc brakes on the wheels 500 of the two rear axles. Such service brakes forms a separate braking arrangement to the regenerative braking system 5.

The vehicle 1 further comprises a throttle 15 configured to control the power output of the fuel cell 14. The throttle 15 may be comprised in the electric drive system 7, such as comprised in the electric drive line 8 or comprised in the fuel cell system 9 or even the fuel cell 14. The throttle 15 may e.g. be associated with, or comprised in, an accelerator pedal within the cabin 2. Such accelerator pedal may be controlled by an operator, or may autonomously operated. However, the throttle 15 may alternatively be arranged closer to the fuel cell 14, or even form a part of the fuel cell 14. Operation of the throttle to control the power output of the fuel cell 14 is associated with a lag time. Thus, the throttle 15 introduces, in use, a lag time between an action of the throttle 15 and the associated power output of the fuel cell 14 for such action 15. For example, in case the action of the throttle 15 is associated with an intended increase in the power output of the fuel cell 14 (e.g. the accelerator pedal is being pressed), the time at which such action is performed and the time at which the resulting increase in power output of the fuel cell 14 is occurring will be corresponding to the lag time associated with the throttle 15. Correspondingly, in case the action of the throttle 15 is associated with an intended reduction in the power output of the fuel cell 14 (e.g. the accelerator pedal is being released), the time at which such action is performed and the time at which the reduction in power output of the fuel cell 14 is occurring will be corresponding to the lag time associated with the throttle 15. The lag time may e.g. between 0.5 and 10 seconds, such as between 1 and 5 seconds.

The fuel cell system 9 further comprises a control and relay unit 16 electrically connecting the fuel cell 14, the energy storage system 12 and the electric traction machine 10 to each other. For example, the control and relay unit 16 may provide an electrical connection between the fuel cell 14 and the electric traction machine 10 for enabling the fuel cell 14 to power the electric traction machine 10. Moreover, the control and relay unit 16 may provide an electrical connection between the fuel cell 14 and the energy storage system 12 for enabling the fuel cell 14 to power (charge) the energy storage devices 12a, 12b of the energy storage system 12. Moreover, the control and relay unit 16 may provide an electrical connection between the energy storage system 12 and the electric traction machine 10 for enabling the energy storage system 12 to power the electric traction machine 10, and for enabling the electric traction machine 10 to power (charge) the energy storage devices 12a, 12b of energy storage system 12. The latter being performed by the regenerative braking system 5 using the electric traction machine 10 as a generator.

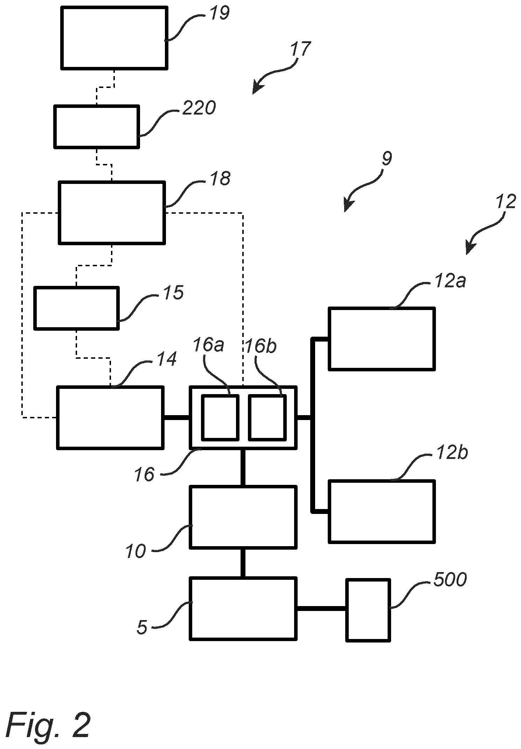

The function of the vehicle 1 with regards to the control and relay unit 16 will now be described in detail with additional reference to Fig. 2 showing a detailed schematical view of a fuel cell system 9 according to one example. The fuel cell system 9 of Fig. 2 may be implemented in the vehicle 1 of Fig. 1, why the same reference numerals are used for indicating corresponding features, typically without repetition thereof. In particular, the vehicle 1 comprises a control system 17 comprising processing circuitry 18 configured to control at least some operation of the electric drive system 7 and the fuel cell system 9. The processing circuitry 18 may be configured to access data 220 from a memory 19. The control system 17 may be at least partly comprised in a control unit onboard the working machine, e.g. in an ECU of the vehicle 1. For example, the processing circuitry 18 of the control system 17 may be comprised in an ECU of the vehicle 1. However, at least part of the control system 17 may be arranged off-board the vehicle 1, such as e.g. a memory 19 in a cloud database.

The processing circuitry 18 is configured to, in response to identifying an operation of the throttle 15 indicating an intended reduction in the power output from the fuel cell 14, control the control and relay unit 16 to direct electricity from the fuel cell 14 to the first energy storage device 12a at least during a time corresponding to said lag time. The processing circuitry 18 is further configured to control the control and relay unit 16 to direct electricity received from the regenerative braking system 5 to the second energy storage device 12b. Hereby, an improved energy efficiency of the drive line 8 of the vehicle 1 can be achieved with improved energy recuperation and/or reduced hydrogen consumption of the fuel cell 14. Thus, the processing circuitry 18 is configured to control the control and relay unit 16 for selectively managing energy flows (electricity) from the fuel cell 14 and regenerative braking system 5 to the first and second energy storage devices 12a, 12b of the energy storage system 12.

Typically, the processing circuitry 18 is configured to control the control and relay unit 16 to direct electricity from the fuel cell 14 to the first energy storage device 12a at least partly prior to controlling the control and relay unit 16 to direct electricity from the regenerative braking system 5 to the second energy storage device 12b. Hereby, the lag of throttle 15 to fuel cell 14 can be handled while setting the regenerative braking system 5 to optimize braking energy recovery. The processing circuitry 18 is typically configured to control the control and relay unit 16 to direct electricity from the fuel cell 14 to the first energy storage device 12a at least partly simultaneously with controlling the control and relay unit 16 to direct electricity from the regenerative braking system 5 to the second energy storage device 12b. Thus, concurrent utilization of generated electricity from the fuel cell 14 and regenerative braking system 5 is provided.

The processing circuitry 18 may be configured to control the control and relay unit 16 further in response to identifying predefined operating conditions of the vehicle 1, such as e.g. anticipated, or upcoming predefined operating conditions of the vehicle 1. For example, processing circuitry 18 may be configured to identify a predefined operating condition of the vehicle 1 including the vehicle 1 reaching a crest 307a of an uphill portion 307 of a road 305. Such predefined operating condition may be comprised in a list and may be accessed by the processing circuitry 18 by transfer of data 220 from the memory 19. Thus, the processing circuitry 18 may be configured to compare the current or upcoming operating conditions (e.g. based on input from sensors of the vehicle) with the list in order to identify the predefined operating condition. Thus, for such identification of the (upcoming) predefined operating condition, the processing circuitry 18 may be configured to control the control and relay unit 16 to direct electricity from the fuel cell 14 to the first energy storage device 12a and to control the control and relay unit to direct electricity from the regenerative braking system 5 to the second energy storage device 12b.

The processing circuitry 18 may be configured to, during operation of the vehicle 1, control the control and relay unit 16 to maintain a predefined state in which there is no electrical interconnection between the first energy storage device 12a and the second energy storage device 12b. Hereby, reduced interference between the first and second energy storage devices 12a, 12b may be provided. The processing circuitry 18 may be configured to control the control and relay unit 16 to maintain the predefined state in response to that the first energy storage device 12a is receiving electricity from the fuel cell 14 and the second energy storage device 12b is receiving electricity from the regenerative braking system 5.

However, in addition to the predefined state in which there is no electrical interconnection between the first and second energy storage devices 12a, 12b, the processing circuitry 18 may be configured to, during operation of the vehicle 1, control the control and relay unit 16 to maintain a predefined state in which there is an electrical interconnection between the first energy storage device 12a and the second energy storage device 12b. For example, the processing circuitry 18 may be configured to control the control and relay unit 16 to interconnect the first and second energy storage devices 12a, 12b for SOC balancing.

The processing circuitry 18 may be configured to control the control and relay unit 16 to supply power to the electric traction machine 10 alternatingly between the first and second energy storage devices 12a, 12b such that power is supplied to the electric traction machine 10 from the energy storage device 12a, 12b with the higher SOC.

The processing circuitry 18 may be further configured to: in response to that the SOC of both the first and second energy storage devices 12a, 12b exceeds a predefined SOC threshold, reduce the power output from the fuel cell 14; and in response to that the SOC of at least one of the first and second energy storage devices 12a, 12b is below the predefined SOC threshold, resume power output from the fuel cell 14.

The processing circuitry 18 may be further configured to further configured to: in response to identifying a power need of the electric traction machine 10 exceeding the power output of the fuel cell 14, control the control and relay unit 16 to direct electricity to the electric traction machine 10 from the first or second energy storage device 12a, 12b, whichever having the highest SOC.

The processing circuitry 18 may be further configured to: in response to that both the first and second energy storage devices 12a, 12b have a SOC higher than a predetermined threshold value, control the throttle 15 to decrease the power output from the fuel cell 14 until at least one of the first and second energy storage devices 12a, 12b has a SOC below the predetermined threshold value.

As shown in Fig. 2, the control and relay unit 16 may comprise a plurality of inverters 16a and relays 16b configured to selectively route power among the fuel cell 14, the electric traction machine 10, and each of the first and second energy storage devices 12a, 12b according to control input signals from the processing circuitry 18.

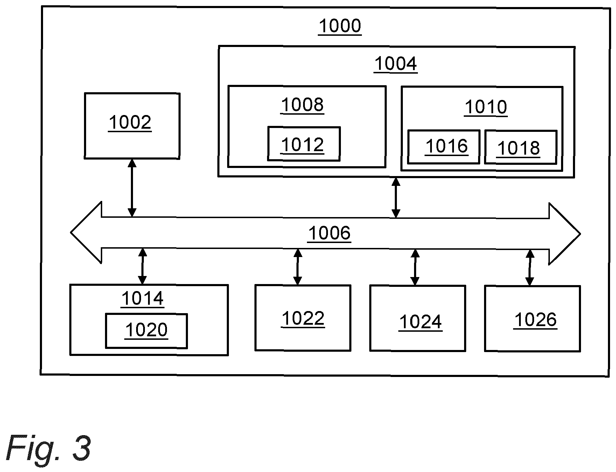

**FIG. 3** is a schematic diagram of a computer system 1000 for implementing examples disclosed herein, e.g. the operation of the control system 17 as described with reference to Figs. 1-2. The computer system 1000 may be implemented in in the processing circuitry 18 of Figs. 1-2. The computer system 1000 is adapted to execute instructions from a computer-readable medium to perform these and/or any of the functions or processing described herein. The computer system 1000 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include a processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with a processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

Example 1. A fuel cell system for a vehicle equipped with a regenerative braking system, the fuel cell system comprising: an electric traction machine; a fuel cell configured to power the electric traction machine, the power output from the fuel cell being controlled by a throttle introducing a lag time between operation of the throttle and the power output of the fuel cell; an energy storage system comprising a first energy storage device being a first battery pack or a first super capacitor, and a second energy storage device being a second battery pack or a second super capacitor; a control and relay unit electrically connecting the fuel cell, the energy storage system and the electric traction machine to each other; a control system comprising a processing circuitry configured to: in response to identifying an operation of the throttle indicating an intended reduction in the power output from the fuel cell, control the control and relay unit to direct electricity from the fuel cell to the first energy storage device at least during a time corresponding to said lag time, and control the control and relay unit to direct electricity received from the regenerative braking system to the second energy storage device.

Example 2. The fuel cell system of example 1, wherein the processing circuitry is configured to control the control and relay unit to direct electricity from the fuel cell to the first energy storage device at least partly prior to controlling the control and relay unit to direct electricity from the regenerative braking system to the second energy storage device.

Example 3. The fuel cell system of any of examples 1-2, wherein the processing circuitry is configured to control the control and relay unit to direct electricity from the fuel cell to the first energy storage device at least partly simultaneously with controlling the control and relay unit to direct electricity from the regenerative braking system to the second energy storage device.

Example 4. The fuel cell system of any of examples 1-3, wherein the processing circuitry is further configured to control the control and relay unit to direct electricity from the fuel cell to the first energy storage device and to control the control and relay unit to direct electricity from the regenerative braking system to the second energy storage device further in response to identifying a predefined operating condition of the vehicle, the predefined operating condition including the vehicle reaching the crest of an uphill portion of a road.

Example 5. The fuel cell system of any of examples 1-4, wherein both the first and second energy storage devices are configured to supply power to the electric traction machine either individually or simultaneously, based on a power demand of the electric traction machine.

Example 6. The fuel cell system of any of examples 1-5, wherein during operation of the vehicle, the processing circuitry is configured to control the control and relay unit to maintain a predefined state in which there is no electrical interconnection between the first energy storage device and the second energy storage device.

Example 7. The fuel cell system of example 6, wherein processing circuitry is configured to control the control and relay unit to maintain the predefined state in response to that the first energy storage device is receiving electricity from the fuel cell and the second energy storage device is receiving electricity from the regenerative braking system.

Example 8. The fuel cell system of any of examples 1-7, wherein the processing circuitry is configured to control the control and relay unit to interconnect the first and second energy storage devices for SOC balancing.

Example 9. The fuel cell system of any of examples 1-8, wherein the processing circuitry is configured to control the control and relay unit to supply power to the electric traction machine alternatingly between the first and second energy storage devices such that power is supplied to the electric traction machine from the energy storage device with the higher SOC.

Example 10. The fuel cell system of any of examples 1-9, wherein the processing circuitry is further configured to: in response to that the SOC of both the first and second energy storage devices exceeds a predefined SOC threshold, reduce the power output from the fuel cell; and in response to that the SOC of at least one of the first and second energy storage devices is below the predefined SOC threshold, resume power output from the fuel cell.

Example 11. The fuel cell system of any of examples 1-10, wherein the processing circuitry is further configured to: in response to identifying a power need of the electric traction machine exceeding the power output of the fuel cell, control the control and relay unit to direct electricity to the electric traction machine from the first or second energy storage device, whichever having the highest SOC.

Example 12. The fuel cell system of any of examples 1-11, wherein the processing circuitry is further configured to: in response to that both the first and second energy storage devices have a SOC higher than a predetermined threshold value, control the throttle to decrease the power output from the fuel cell until at least one of the first and second energy storage devices has a SOC below the predetermined threshold value.

Example 13. The fuel cell system of any of examples 1-12, wherein the control and relay unit comprises a plurality of inverters and relays configured to selectively route power among the fuel cell, the electric traction machine, and each of the first and second energy storage devices according to control input signals from the processing circuitry.

Example 14. The fuel cell system of any of examples 1-13, wherein the lag time of the fuel cell is between 0.5 and 10 seconds, such as between 1 and 5 seconds.

Example 15. A vehicle comprising a fuel cell system according to any one of examples 1-14, and a regenerative braking system configured to generate electricity during braking or deceleration of the vehicle.

Example 16. The vehicle of example 15, wherein the first energy storage device is a first battery pack and the second energy storage device is a second battery pack.

Example 17. The vehicle of example 15, wherein the first energy storage device is a first super capacitor and the second energy storage device is a second super capacitor.

Example 18. The vehicle of any of examples 15-17, wherein the control and relay unit comprises a plurality of inverters and relays configured to selectively route power among the fuel cell, the electric traction machine, and each of the first and second energy storage devices according to control input signals from the processing circuitry.

Example 19. The vehicle of any of examples 15-18 being a working machine.

Example 20. The vehicle of example 19 being a loader or a dumper having a dump body for carrying material.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A fuel cell system (120) for a vehicle (1) equipped with a regenerative braking system (5), the fuel cell system comprising:
- an electric traction machine (10);
- a fuel cell (14) configured to power the electric traction machine, the power output from the fuel cell being controlled by a throttle (15) introducing a lag time between operation of the throttle and the power output of the fuel cell;
- an energy storage system (12) comprising a first energy storage device (12a) being a first battery pack or a first super capacitor, and a second energy storage device (12b) being a second battery pack or a second super capacitor;
- a control and relay unit (16) electrically connecting the fuel cell, the energy storage system and the electric traction machine to each other; and
- a control system (17) comprising a processing circuitry (18) configured to:
- in response to identifying an operation of the throttle indicating an intended reduction in the power output from the fuel cell, control the control and relay unit to direct electricity from the fuel cell to the first energy storage device at least during a time corresponding to said lag time, and control the control and relay unit to direct electricity received from the regenerative braking system to the second energy storage device.

2. The fuel cell system of claim 1, wherein the processing circuitry (18) is configured to control the control and relay unit (16) to direct electricity from the fuel cell (14) to the first energy storage device (12a) at least partly prior to controlling the control and relay unit to direct electricity from the regenerative braking system (5) to the second energy storage device (12b).

3. The fuel cell system of any of claims 1-2, wherein the processing circuitry (18) is configured to control the control and relay unit (16) to direct electricity from the fuel cell (14) to the first energy storage device (12a) at least partly simultaneously with controlling the control and relay unit to direct electricity from the regenerative braking system (5) to the second energy storage device (12b).

4. The fuel cell system of any of claims 1-3, wherein the processing circuitry (18) is further configured to control the control and relay unit (16) to direct electricity from the fuel cell (14) to the first energy storage device (12a) and to control the control and relay unit to direct electricity from the regenerative braking system (5) to the second energy storage device (12b) further in response to identifying a predefined operating condition of the vehicle, the predefined operating condition including the vehicle reaching the crest (307a) of an uphill portion (307) of a road (305).

5. The fuel cell system of any of claims 1-4, wherein both the first and second energy storage devices (12a, 12b) are configured to supply power to the electric traction machine (10) either individually or simultaneously, based on a power demand of the electric traction machine (10).

6. The fuel cell system of any of claims 1-5, wherein during operation of the vehicle, the processing circuitry (18) is configured to control the control and relay unit (16) to maintain a predefined state in which there is no electrical interconnection between the first energy storage device (12a) and the second energy storage device (12b).

7. The fuel cell system of claim 6, wherein processing circuitry (18) is configured to control the control and relay unit (16) to maintain the predefined state in response to that the first energy storage device (12a) is receiving electricity from the fuel cell (14) and the second energy storage device (12b) is receiving electricity from the regenerative braking system (5).

8. The fuel cell system of any of claims 1-7, wherein the processing circuitry (18) is configured to control the control and relay unit (16) to interconnect the first and second energy storage devices (12a, 12b) for SOC balancing.

9. The fuel cell system of any of claims 1-8, wherein the processing circuitry (18) is configured to control the control and relay unit (16) to supply power to the electric traction machine (10) alternatingly between the first and second energy storage devices (12a, 12b) such that power is supplied to the electric traction machine (10) from the energy storage device (12a, 12b) with the higher SOC.

10. The fuel cell system of any of claims 1-9, wherein the processing circuitry (18) is further configured to: in response to that the SOC of both the first and second energy storage devices (12a, 12b) exceeds a predefined SOC threshold, control the throttle (15) to decrease the power output from the fuel cell (14); and in response to that the SOC of at least one of the first and second energy storage devices (12a, 12b) is below the predefined SOC threshold, control the throttle to resume power output from the fuel cell.

11. The fuel cell system of any of claims 1-10, wherein the processing circuitry (18) is further configured to: in response to identifying a power need of the electric traction machine (10) exceeding the power output of the fuel cell (14), control the control and relay unit (16) to direct electricity to the electric traction machine from the first or second energy storage device (12a, 12b), whichever having the highest SOC.

12. The fuel cell system of any of claims 1-11, wherein the processing circuitry (18) is further configured to: in response to that both the first and second energy storage devices (12a, 12b) have a SOC higher than a predetermined threshold value, control the throttle (15) to decrease the power output from the fuel cell (14) until at least one of the first and second energy storage devices (12a, 12b) has a SOC below the predetermined threshold value.

13. The fuel cell system of any of claims 1-12, wherein the control and relay unit (16) comprises a plurality of inverters (16a) and relays (16b) configured to selectively route power among the fuel cell, (14) the electric traction machine (10), and each of the first and second energy storage devices (12a, 12b) according to control input signals from the processing circuitry (18).

14. The fuel cell system of any of claims 1-13, wherein the lag time of the fuel cell (14) is between 0.5 and 10 seconds, such as between 1 and 5 seconds.

15. A vehicle comprising a fuel cell system according to any one of claims 1-14, and a regenerative braking system (5) configured to generate electricity during braking or deceleration of the vehicle.
